Europäisches Patentamt

(19) European Patent Office

Office européen des brevets

(11) **EP 0 691 219 A2**

(12) **EUROPEAN PATENT APPLICATION**

(43) Date of publication:
10.01.1996 Bulletin 1996/02

(51) Int. Cl.$^6$: **B60C 11/00**

(21) Application number: **95114790.9**

(22) Date of filing: **01.10.1993**

---

(84) Designated Contracting States:
**DE ES FR GB IT**

(30) Priority: **02.10.1992 JP 264816/92**

(62) Application number of the earlier application in accordance with Art. 76 EPC: **93307823.0**

(71) Applicant: **Bridgestone Corporation
Tokyo (JP)**

(72) Inventors:
• **Tani, Katsutoshi
Kodaira City, Tokyo (JP)**

• **Yonezawa, Takeshi
Tokorozawa City, Saitama Pref. (JP)**
• **Ando, Toshiaki
Kodaira City, Tokyo (JP)**

(74) Representative: **Whalley, Kevin
London WC2A 3LS (GB)**

Remarks:
This application was filed on 20 - 09 - 1995 as a divisional application to the application mentioned under INID code 60.

---

(54) **Pneumatic tires**

(57) A pneumatic tire having a tread pattern formed by arranging lateral grooves (13a, 13b, 13c) having a widthwise extending component in a ground contact portion of a tread and combining at least two kinds of pitch segments having different pitch lengths ($P_1$, $P_2$, $P_3$) in the circumferential direction of the tread, in which a negative ratio in each pitch segment is 25-55%, characterized in that the depth of the lateral groove included in each pitch segment and the angle of the groove wall with respect to the land surface are constant, and in that the pitch length ($P_1$, $P_2$, $P_3$) of each pitch segment and the opening width ($a_1$, $a_2$, $a_3$) of the lateral groove (13a, 13b, 13c) included in each pitch segment satisfy the following relationships:

$$P_1 < P_2 < P_3$$

$$a_1 < a_2 < a_3$$

$$a_1/P_1 > a_2/P_2 > a_3/P_3.$$

*FIG. 2a*

EP 0 691 219 A2

## Description

This invention relates to pneumatic tires, and more particularly to a pneumatic radial tire having an improved uniformity and usable for passenger cars as well as small-size truck, truck and bus running on good roads.

In pneumatic radial tires for passenger cars, a tread pattern is generally formed by properly combining various kinds of patch segments having different pitch lengths on a circumference of a tire for reducing various noises based on the tire tread pattern.

In this connection, there have widely been attempted various methods such as a method wherein a ratio of opening width in lateral grooves included in each pitch segment and having an extending component in the widthwise direction of the tread is selected so as to become equal to the pitch ratio when the angle of groove wall with respect to a surface of a land portion and the groove depth are constant, a method wherein the angle of lateral groove wall is selected in such a manner that the volume ratio of the lateral groove having a constant groove depth is equal to the pitch ratio.

In the former technique wherein the ratio of opening width in each lateral groove is made equal to the pitch ratio, the thickness of the tread becomes thicker as the pitch length becomes long, so that the difference in compression modulus of elasticity between the pitch segments becomes considerably larger due to the difference of tread thickness in the pitch segments in addition to the difference in the rigidity between the pitch segment having a long pitch length and the pitch segment having a short pitch length and hence the tire uniformity, particularly higher component in radial force variation (hereinafter referred to as RFV) is degraded to largely cause undesired uneven wear of the tire. In the latter technique wherein the volume ratio in the lateral grooves is made equal to the pitch ratio, the tread thickness and hence the distance from the carcass to the land surface becomes equal independently of the pitch length, but the difference in the pattern rigidity between the pitch segment having a long pitch length and the pitch segment having a short pitch length still remains, so that RFV can not effectively be controlled and the occurrence of uneven wear can not sufficiently be prevented.

It is, therefore, an object of the invention to solve the aforementioned drawbacks of the above conventional techniques and to provide a pneumatic tire having considerably improved tire uniformity for RFV by off-setting the difference in rigidity between pitch segments due to the difference in pitch length with the difference in thickness between tread portions.

According to the invention, there is the provision of a pneumatic tire having a tread pattern formed by arranging lateral grooves having a widthwise extending component in a ground contact portion of a tread and combining at least two kinds of pitch segments having different pitch lengths in a circumferential direction of the tread, in which a negative ratio in each pitch segment is 25-55%, characterized in that a distance from a center of the tire to a surface of a land portion at a tire section in the circumferential direction under an inflation of air pressure is made long in a pitch segment having a short pitch length as compared with a pitch segment having a long pitch length.

In this case, the optimum value of the difference in the distance from the tire center to the land surface between the pitch segments is dependent upon the pitch ratio, pitch length, hardness of tread rubber, groove depth and the like, so that it is necessary to determine the optimum value in accordance with these factors. In general, the difference between these distances is within ±0.1 mm with respect to a distance to middle pitch segment as a standard in case of passenger car tires and not less than +0.2 mm but not more than -0.2 mm in case of radial tires for off-the-road four-wheeled driven vehicles.

In another pneumatic tire according to the invention, when the depth of the lateral groove included in each pitch segment and the angle of the groove wall with respect to the land surface are constant, the pitch length P of each pitch segment and the opening width a of the lateral groove included in each pitch segment satisfy the following relationships:

$$P_1 < P_2 < P_3$$

$$a_1 < a_2 < a_3$$

$$a_1/P_1 > a_2/P_2 > a_3/P_3$$

In this case, the ratio for narrowing the groove opening width in the long pitch segment and the ratio for widening the groove opening width in the short pitch segment are preferable to be not less than 51% but not more than 150%, preferably 70-130% of a distance from an intersect position between groove wall and groove bottom in the middle pitch segment as a standard with respect to the groove width when each groove opening width ratio is equal to the pitch ratio to an intersect position between the groove wall and the groove bottom producing the groove volume ratio equal to the pitch ratio.

In other words, when the groove opening width ratio is less than 51%, it is difficult to obtain a difference in rigidity between pitch segments, for example, a difference in tread thickness sufficiently counterbalancing to a difference in block rigidity, more exactly a difference in a distance from an outermost belt layer to a land surface, while when it exceeds 150%, the difference in tread thickness becomes larger than the difference in block rigidity and RFV becomes inversely large.

In the other pneumatic tire according to the invention, the negative ratio in each pitch segment is constant and also the depth of the lateral groove included in each pitch segment is constant and the angle of each groove wall with respect to the land surface is made large in the pitch segment having a longer pitch length. Preferably, the angle is larger in the block having a long pitch length and smaller in the block having a short pitch length as compared with the angle bringing about the volume ratio equal to the pitch ratio as a standard.

The ratio of making the groove wall angle large or small with respect to the groove wall in the middle pitch segment as a standard is favorable to be 1.5-2.5 times of the difference in the groove wall angle between the middle pitch segment and the other pitch segment having the volume ratio equal to the pitch ratio.

That is, when the ratio of the groove wall angle is less than 1.5 times, the difference in tread thickness corresponding to the difference in rigidity between pitch segments can not be obtained, and there is still retained RFV waveform in which the rigidity is large in the long pitch segment and small in the short pitch segment, while when it exceeds 2.5 times, the difference in tread thickness exceeding the difference in rigidity between pitch segments is caused to take a waveform in which RFV is small in the long pitch segment and large in the short pitch segment and considerably increase the difference in tread thickness, whereby a fear of forming a nucleus for uneven wear becomes high.

In the other pneumatic tire according to the invention, the negative ratio in each pitch segment is constant and the distance from the outermost belt layer to the land surface is long in the pitch segment having a short pitch length.

Further, a sum of transverse sectional areas of vent-spews remaining in the land portion is large in the pitch segment having a long pitch length.

The invention will be described with reference to the accompanying drawings, wherein:

Fig. 1 is a schematically sectional view of a first embodiment of the tread portion according to the invention in the circumferential direction of the tread;
Fig. 2 is a schematic view of a first embodiment of the tread structure;
Fig. 3 is a schematically sectional view of the conventional tread portion in the circumferential direction of the tread;
Fig. 4 is a graph showing high waveforms of RFV in the tire according to the invention and the conventional tire;
Fig. 5 is a schematic view of a second embodiment of the tread structure;
Fig. 6 is a schematic view of a third embodiment of the tread structure;
Fig. 7 is a developed view of an embodiment of vent-spew formation;
Fig. 8 is a graph showing another high waveforms of RFV in the tire according to the invention and the conventional tire;
Fig. 9 is a diagrammatical view of a tread pattern applicable to the invention;
Fig. 10 is a diagrammatical view of a tread pattern not applicable to the invention; and
Fig. 11 is a diagrammatical view of another tread pattern applicable to the invention.

The tread rubber located as the outermost layer of the tire is generally formed by using a rubber sheet cut into a proper length after continuously extruded through a extruder, so that the thickness of the green tread rubber used per each tire becomes substantially uniform over the full circumference of the tire.

In the tread rubber, lateral grooves are formed in such a manner that the ratio of groove width is equal to the pitch ratio or the ratio of groove volume is equal to the pitch ratio even in any groove portions in the depthwise direction of the lateral groove, whereby it is made possible to hold the tread thickness in the tire product constant irrespectively of the short or long pitch length.

Even in this case, however, the difference in rigidity between pitch segments due to the short or long pitch length still remains as mentioned above, so that it is impossible to effectively control RFV.

According to the invention, therefore, the opening width of the lateral groove is narrowed to thin the thickness of the tread rubber in the pitch segment having a long pitch length, while the opening width of the lateral groove is widened to thicken the thickness of the tread rubber in the pitch segment having a short pitch length as compared with the case that the ratio of opening width in the lateral groove is set to be equal to the pitch ratio, whereby the distance from the center of the tire to the land surface under an inflation of air pressure is made short in the pitch segment having a long pitch length, which is properly combined with the rigidity element and radial run-out (hereinafter referred to as RRO), and hence RFV produced due to the difference in rigidity between pitch segments can effectively be off-set by the difference in tread rubber thickness to sufficiently make RFV waveform uniform over the full circumference of the tire.

In the invention, the reason why the negative ratio in each pitch segment is limited to a range of 25-55% is due to the fact that when it is less than 25%, the groove width is generally narrow and the angle of the groove wall with respect to the land surface is small, while the tread volume is large, so that the ratio of the difference in groove volume contributing to variation of tread gauge becomes very small. On the other hand, when it exceeds 55%, the running performance on good road or paved road can not be attained.

In such a pneumatic tire, when the depth of the lateral groove included in each pitch segment and the angle of groove wall with respect to the land surface are constant and the pitch length P of each pitch segment and the opening width a of lateral groove included in each pitch segment satisfy relationships of $P_1<P_2<P_3$, $a_1<a_2<a_3$ and $a_1/P_1>a_2/P_2>a_3/P_3$ as previously mentioned, the opening width of the lateral groove is narrowed to thin the thickness of the tread rubber in the pitch segment having a long pitch length, while the opening width of the lateral groove is widened to thicken the thickness of the tread rubber in the pitch segment having a short pitch length as compared with the case that the ratio of opening width in the lateral groove is set to be equal to the pitch ratio, whereby the distance from the center of the tire to the land surface under an inflation of air pressure is made short in the pitch segment having a long pitch length, which is properly combined with the rigidity element and RRO, and hence RFV produced due to the difference in rigidity between pitch segments can effectively be off-set by the difference in tread rubber thickness to sufficiently make RFV waveform uniform over the full circumference of the tire likewise the aforementioned case.

In other pneumatic tire, when the negative ratio in each pitch segment is constant and the pitch ratio is equal to the ratio of groove opening width and further the depth of each lateral groove is constant and the angle of groove wall with respect to the land surface is large in the pitch segment having a long pitch length, the tread rubber thickness is thin in the pitch segment having a long pitch length and thick in the pitch segment having a short pitch length, so that the distance from the center of the tire to the land surface under an inflation of air pressure is made short in the pitch segment having a long pitch length, which is properly combined with the rigidity element and RRO, and hence RFV produced due to the difference in rigidity between pitch segments can effectively be off-set by the difference in tread rubber thickness.

When the negative ratio in each pitch segment is constant and the distance from the center of the tire to the land surface is long in the pitch segment having a short pitch length, or when the thickness of the tread rubber itself is thicker in the pitch segment having a short pitch length, RRO is caused. However, when it is properly combined with the rigidity between pitch segments, RFV produced due to the rigidity between pitch segments can effectively be off-set by the difference in tread rubber thickness to sufficiently uniformize RFV over the full circumference of the tire.

Furthermore, when the sum of transversely sectional areas of vent-spews remaining in the land portion in a direction perpendicular to a lengthwise direction of the vent-spew is made large in the pitch segment having a long pitch length to prolong the distance from the center of the tire to the land surface under an inflation of air pressure in the pitch segment having a short pitch length, RFV can sufficiently be uniformized over the full circumference of the tire likewise the above case.

Moreover, the tread rubber thickness adjusted by the vent-spew is typically represented by the following formula:

$$\text{tread rubber thickness} = (\pi/4)A^2 \cdot N \cdot L/S \propto A^2 \cdot N \cdot L/S$$

(wherein S is a surface area of a land portion, A is a diameter of a vent-spew, N is number of vent-spews and L is a length of a vent-spew), from which it is understood that the tread rubber thickness can easily be controlled by selecting the vent-spew diameter A and vent-spew number N with respect to the land surface area S.

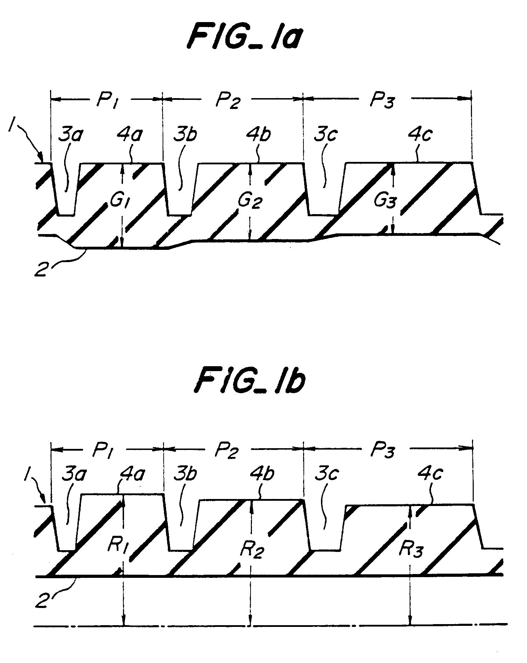

In Fig. 1 is partly shown a schematically developed sectional view of a tread portion of the pneumatic tire according to the invention taken along a circumferential direction of the tire, in which numeral 1 is a tread portion and numeral 2 an outermost belt layer.

The tread pattern of this tire is formed by combining three kinds of pitch segments $P_1$, $P_2$ and $P_3$ having different pitch lengths in the circumferential direction of the tread in which the pitch lengths of these pitch segments are $P_1<P_2<P_3$. In the pitch segments, land portions 4a, 4b, 4c are defined by lateral grooves 3a, 3b, 3c each having a component extending in a widthwise direction of the tread. Further, a relation ship among distance $G_1$ from the outermost belt layer 2 to the land surface in the land portion 4a having a shortest pitch length, distance $G_2$ from the outermost belt layer 2 to the land surface in the land portion 4b having a shorter pitch length and distance $G_3$ from the outermost belt layer 2 to the land surface in the land portion 4c having a longest pitch length is $G_1>G_2>G_3$ and the negative ratio in each of the pitch segments $P_1$, $P_2$ and $P_3$ is 38%.

For instance, in the vulcanization of the tire having the tread portion 1 of the above structure, the outermost belt layer 2 has unevenness in the radial direction of the tire as shown in Fig. 1a, so that the surfaces of the land portions 4a, 4b, 4c locate on an arc having substantially the same radius of curvature. However, when the belt and hence the outermost belly layer is expanded in form of a circle at a section in the circumferential direction of the tread by the inflation of air pressure as shown in Fig. 1b, the distances from the center of the tire to the land surfaces, i.e. radii up to the land surface $R_1$, $R_2$ and $R_3$ have a relationship of $R_1>R_2>R_3$ based on the difference among the distances $G_1$, $G_2$ and $G_3$.

As previously mentioned, the optimum values of these radii $R_1$, $R_2$ and $R_3$ are determined in accordance with the pitch ratio, pitch length and the like.

Thus, a slight amount of RRO is caused in the tire based on a design of a vulcanization mold, but it can properly be combined with rigidity element between pitch segments to effectively control RFV.

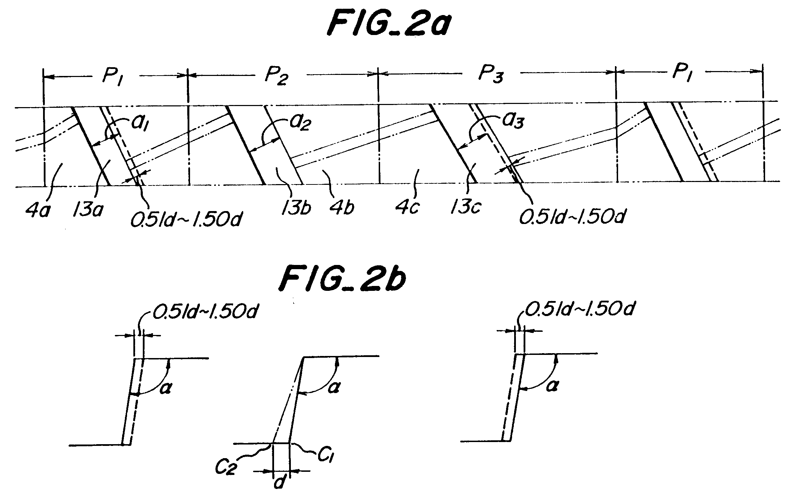

Fig. 2 shows a first embodiment of the tread structure, in which Fig. 2a is an example of a repeating unit for the combination of pitch segments constituting the tread pattern developed in the circumferential direction of the tread.

The lateral groove included in each pitch segment having a negative ratio of 38% is a slant groove 13a, 13b or 13c inclined in the same direction with respect to the widthwise direction of the tread and having a component extending in the circumferential direction of the tread. In this tread pattern, the depths of these slant grooves 13a, 13b, 13c are constant and the angle of groove wall with respect to the land surface in the slant grooves 13a, 13b, 13c, more exactly the groove wall angle at a developed state of the tread pattern is constant, while the pitch lengths $P_1$, $P_2$, $P_3$ of the pitch segments and the opening widths $a_1$, $a_2$, $a_3$ of the slant grooves 13a, 13b, 13c included in these pitch segments satisfy the following relationships:

$$P_1 < P_2 < P_3$$

$$a_1 < a_2 < a_3$$

$$a_1/P_1 > a_2/P_2 > a_3/P_3$$

Thus, as shown by dotted lines in Fig. 2a, the opening widths $a_1$, $a_2$ and $a_3$ are narrow in the pitch segment having a long pitch length and wide in the pitch segment having a short pitch length as compared with the width in the conventional technique shown by a solid line in Fig. 2a in which the ratio of groove opening width is equal to the pitch ratio.

In this case, the ratio of narrowing or widening the opening width with respect to the opening width shown by the solid line in Fig. 2a is preferable to be not less than 51% but not more than 150%, particularly 70-130% of a distance d from an intersect position $C_1$ between actual groove wall and groove bottom to an intersect position $C_2$ between phantom groove wall and groove bottom bringing about groove volume ratio equal to the pitch ratio in a middle pitch segment $P_2$ as a standard when one groove wall of the slant groove in a direction perpendicular to each groove is shown by dotted lines in Fig. 2b.

Moreover, the tread pattern may be provided with a groove extending between the two pitch segments as shown by phantom line in Fig. 2a.

According to this tread structure, the groove volume is effectively decreased in the long pitch segment and effectively increased in the short pitch segment as compared with the conventional technique in which the ratio of groove opening width is equal to the pitch ratio, so that the feature on Fig. 1 is easily and surely realized.

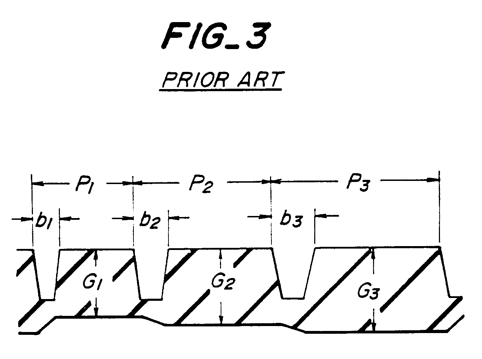

In the conventional technique in which the ratio of groove opening width is equal to the pitch ratio, the distances from the outermost belly layer to the land surface $G_1$, $G_2$, $G_3$ are $G_3>G_2>G_1$ as shown in Fig. 3 following Fig. 1. As to the tire uniformity, particularly RFV, the difference in these distances undesirably promotes the degradation of RFV originally resulted from the difference in rigidity between pitch segments as previously mentioned.

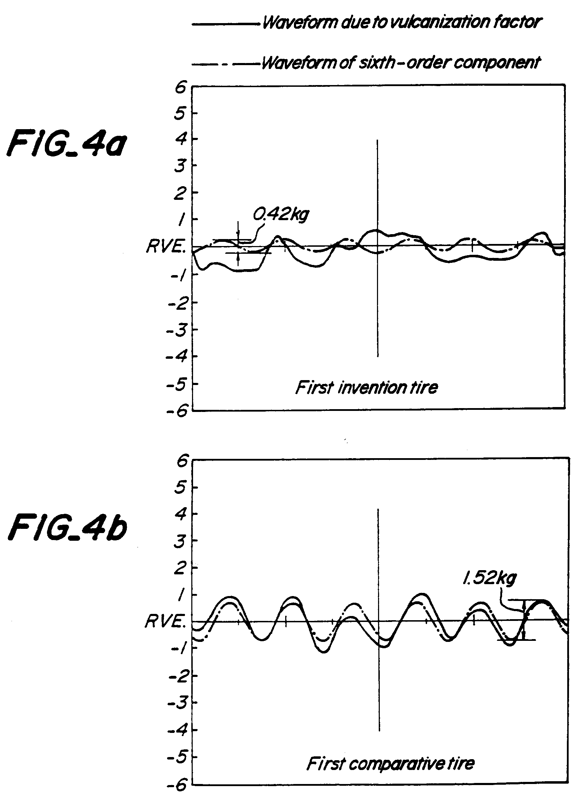

According to the embodiment of Fig. 2, there are manufactured a first invention tire and a first comparative tire each having a tire size of 255/40 ZR 17. In the first invention tire, the ratio of pitches $P_1$:$P_2$:$P_3$ is 7:9:11, and the depth of each slant groove 6.4 mm, and the angle of the groove wall in each slant groove is 105°, while the groove opening width in the pitch segment $P_3$ is narrowed by 1.0 times of the distance d from the position shown by the solid line in Fig. 2a and the groove opening width in the pitch segment $P_1$ is widened by 1.0 times of the distance d. The first comparative tire has the same as in the first invention tire except that the ratio of groove opening width is equal to the pitch ratio as shown by the solid line in Fig. 2a. The higher component of RFV is measured with respect to these tires to obtain a result as shown in Fig. 4.

In this test, the tire mounted on a rim of 9 inches in width and inflated under an air pressure of 2.0 kgf/cm$^2$ is pushed on a rotating drum of 838.2 mm (33 inches) in diameter in a uniformity testing machine under a load of 500 kg, during which the drum is rotated at a speed of 60 rpm.

In the graphs of Fig. 4, RFV waveform is separated by green tire factor and vulcanization factor, i.e. vulcanization mold factor, and average waveform of plural tires is shown as sixth-order component by Fourier analysis. As seen from these graphs, peak-to-peak value of RFV resulted from vulcanization factor, which is particularly a problem to be solved in the invention, is 1.52 kg in the comparative tire and 0.42 kg in the invention tire. That is, the invention can develop the very effective control of RFV.

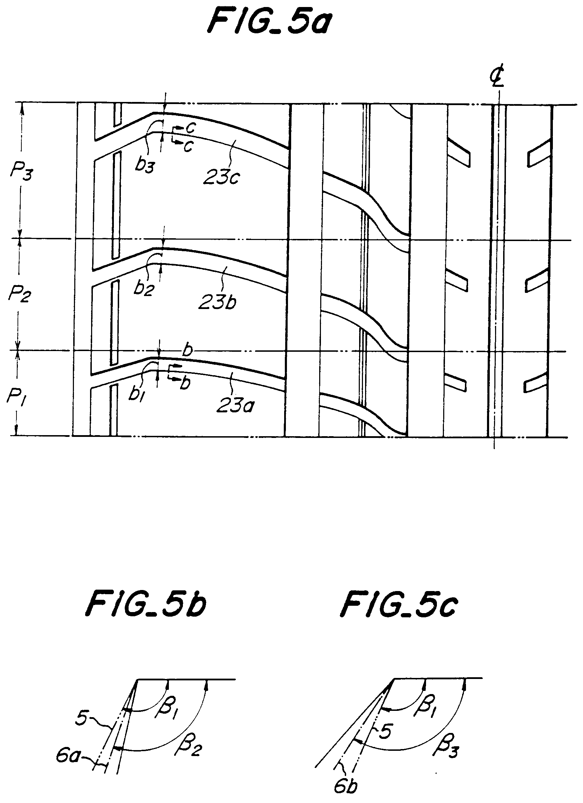

In Fig. 5 is shown a second embodiment of the tread structure, in which pitch segments $P_1$, $P_2$, $P_3$ in the tread pattern shown as a developed view in Fig. 5a have a constant negative ratio within a range of 25-55%, respectively. Therefore, when the pitch ratio is 7:9:11 as previously mentioned, the ratio of opening widths $b_1$:$b_2$:$b_3$ in lateral grooves 23a, 23b, 23c included in these pitch segments is also 7:9:11.

In this tread pattern, the depths of the lateral grooves 23a, 23b, 23c are constant and the angle of groove wall with respect to the land surface is made large in the pitch segment having a long pitch length. That is, the ratio of making the groove wall angle small or large with respect to the groove wall in the middle pitch segment as a standard is preferable to be 1.5-2.5 times of the difference between an angle $\beta_1$ of groove wall 5 in the pitch segment $P_2$ with respect to the land surface and an angle $\beta_2$ or $\beta_3$ of groove wall 6a or 6b in the other pitch segment $P_1$ or $P_3$ for equalizing the groove volume ratio to the pitch ratio when one groove wall of each of the lateral grooves 23a, 23c is sectionally shown in Figs. 5b and 5c. Thus, the groove volume is decreased in the long pitch segment and increased in the short pitch segment as compared with the case in which the groove volume ratio in each pitch segment is equal to the pitch ratio, so that the ratio of increasing the land volume in the long pitch segment is effectively reduced as compared with the ratio of increasing the land volume in the short pitch segment and hence the distance from the center of the tire to the land surface under an inflation of air pressure as shown in Fig. 1b is longest in the short pitch segment and shortest in the long pitch segment.

According to the embodiment of Fig. 5, there are manufactured a second invention tire and a second comparative tire each having a tire size of 255/40 ZR 17. In the second invention tire, the pitch ratio of $P_1:P_2:P_3$ is 7:9:11, and the depth of the each lateral groove is 6.4 mm, and the angle of groove wall with respect to the land surface is 99° in the pitch segment $P_1$, 105° in the pitch segment $P_2$ and 111° in the pitch segment $P_3$, respectively. The second comparative tire has the same structure as the second invention tire except that the angle of groove wall in all pitch segments is 105°. When the RFV waveform is measured with respect to these tires in the same manner as in Fig. 4, the peak-to-peak value of RFV resulted from vulcanization factor is 1.90 kg in the second comparative tire and 0.50 kg in the second invention tire.

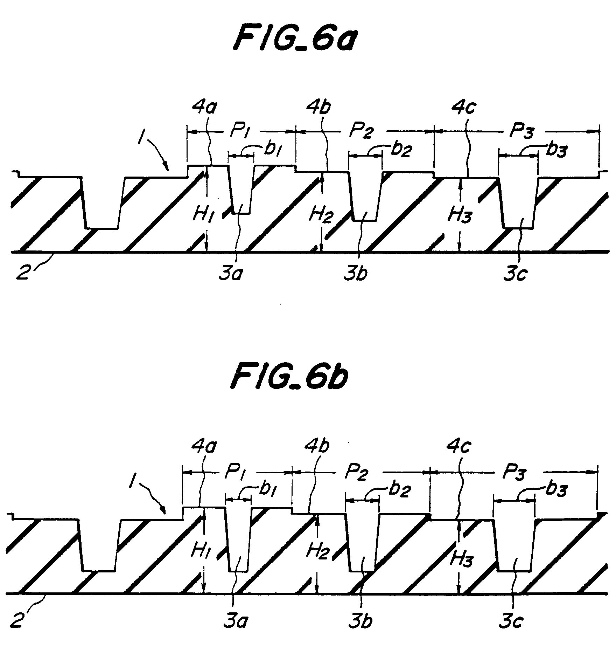

In Fig. 6 is shown a third embodiment of the tread structure sectionally shown in the circumferential direction of the tread, in which the negative ratio in each pitch segment is constant within a range of 25-55%, while distances $H_1$, $H_2$, $H_3$ from the outermost belt layer 2 to land surfaces 4a, 4b, 4c are made long as the pitch length becomes short.

The depths of the lateral grooves 3a, 3b, 3c are same as shown in Fig. 6a or the bottom positions of these grooves are same as shown in Fig. 6b. In the former case, the groove width is narrow and the radius of groove bottom is small a the pitch length becomes short, which are disadvantageous in the resistance to cracking in the groove bottom, but the tread rubber gauge at the groove bottom becomes thick, which is advantageous in the resistance to groove bottom cracking. The latter case can delay the wearing because the pitch segment having a short pitch length and a weak block rigidity generally tends to promote the wearing.

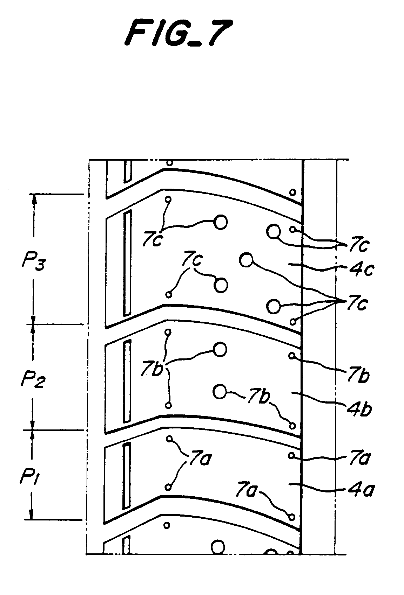

In Fig. 7 is shown a fourth embodiment of the tread structure being a developed view of the tread pattern in the circumferential direction of the tread. A sum of transversely sectional areas of at least one vent-spew 7a, 7b or 7c taken in a direction perpendicular to a lengthwise direction of the vent-spew, which is formed on each of land portions 4a, 4b, 4c in pitch segments, is made large as the pitch length becomes long, whereby the thickness of the land portion as shown in Fig. 1 or 6 is realized in each pitch segment.

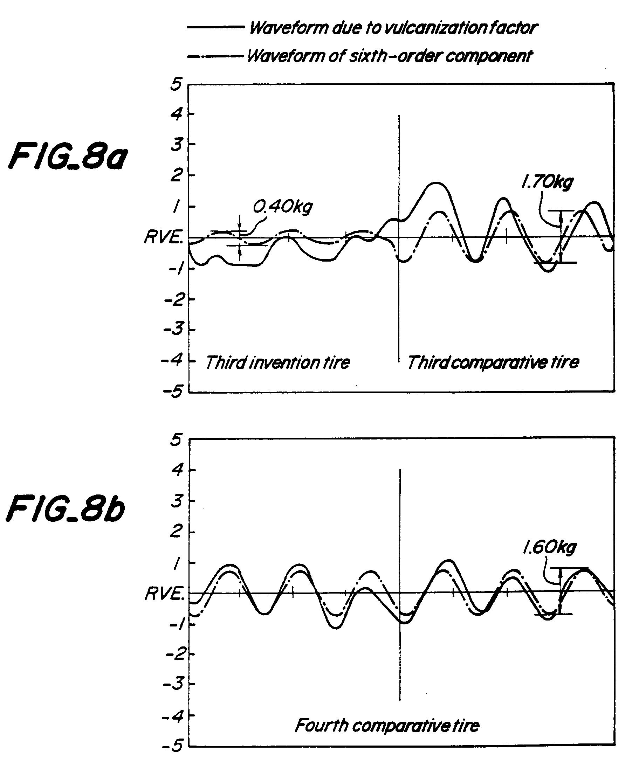

According to the embodiment of Fig.7, there are manufactured a third invention tire and third and fourth comparative tires each having a tire size of 255/40 ZR 17. In the third invention tire, the pitch ratio of the pitch segments is 7:9:11 and the ratio of sum of transversely sectional areas in the vent-spews 7a, 7b, 7c is 100:240:450. The third comparative tire is the same as the third invention tire except that the ratio of sum of spew sectional areas is 1:1:1, while the fourth comparative tire has no vent-spew. Fig. 8 shows average sixth-order component of RFV measured in the same manner as mentioned above. As seen from the graphs in Fig 8, the peak-to-peak value of RFV is 1.70hg in the third comparative tire, 1.60 kg in the fourth comparative tire and 0.40 kg in the third invention tire, respectively.

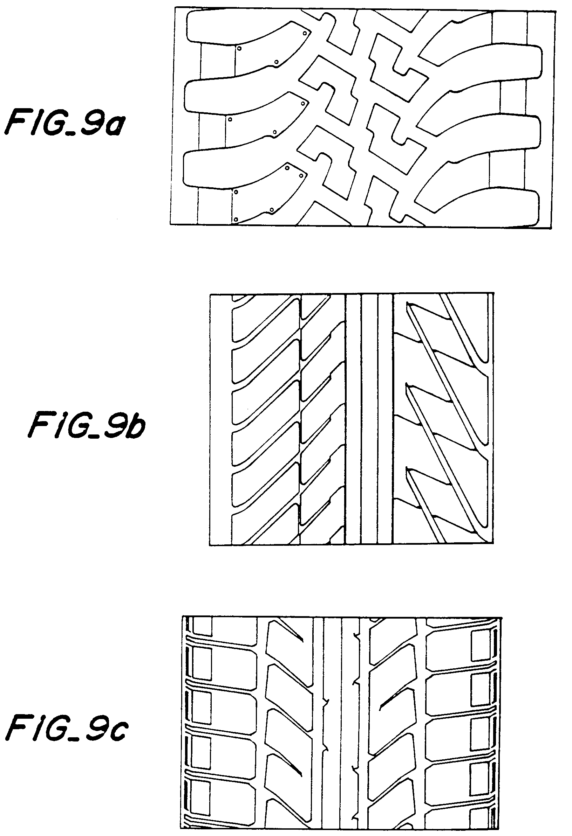

Although the invention has been described with respect to the illustrated embodiments, it is naturally applicable to tread patterns in which the lateral groove is provided with a component extending in the widthwise direction of the tread as shown in Figs. 9a, 9b and 9c.

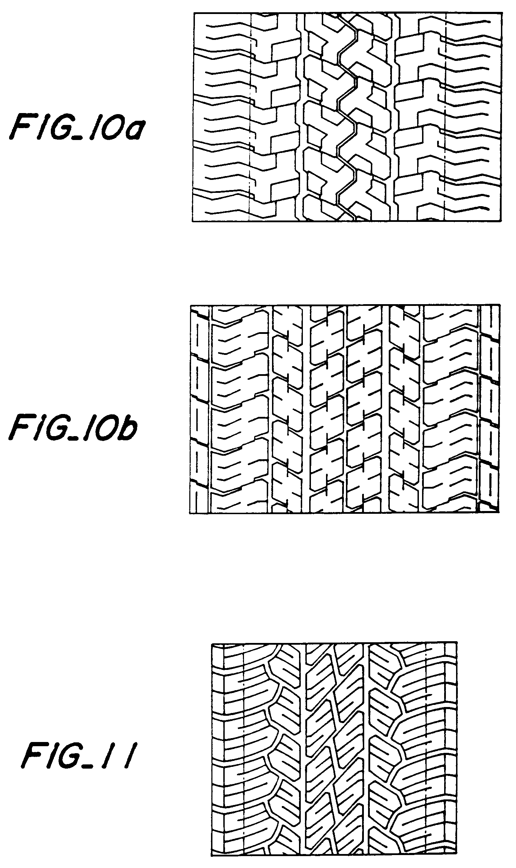

On the other hand, the invention is not applied to the tread pattern in which the component extending in the widthwise direction of the tread is considerably less in the circumferential zigzag groove as shown in Figs. 10a and 10b, while it may be applied to the tread pattern in which the component extending in the widthwise direction of the tread is relatively large in the circumferential zigzag groove as shown in Fig. 11.

As mentioned above, according to the invention, RFV produced due to the difference in rigidity between pitch segments, particularly higher component thereof can be off-set by the difference in tread rubber thickness formed by properly combining rigidity element resulted from the pitch ratio of pitch segments with RRO inherent to the invention to sufficiently uniformize RFV waveform over the full circumference of the tire.

In addition, when the pitch lengths P of the pitch segments and the opening widths a of lateral grooves included in these pitch segments satisfy $P_1 < P_2 < P_3$, $a_1 < a_2 < a_3$ and $a_1/P_1 > a_2/P_2 > a_3/P_3$, the groove opening width in the pitch segment having a long pitch length is narrowed to thin the tread rubber thickness and the groove opening width in the pitch segment having a short pitch length is widened to thicken the tread rubber thickness as compared with the case that the ratio of opening widths in the pitch segments is equal to the pitch ratio, whereby the distance from the center of the tire to the surface of the land portion under an inflation of air pressure is made short as the pitch length in the pitch segment becomes long, which is properly combined with the rigidity element and RRO to produce the difference in tread rubber thickness among the pitch segments. This can effectively off-set RFV produced due to the difference in rigidity between pitch segments to sufficiently uniformize the RFV waveform over the full circumference of the tire.

Furthermore, the angle of the groove wall with respect to the land surface is made large as the pitch length in the pitch segment becomes long, the tread rubber thickness is thin in the long pitch segment and thick in the short pitch segment, so that the distance from the tire center to the land surface under an inflation of air pressure is made long as the pitch length in the pitch segment becomes short, which can properly be combined with the rigidity element and RRO to produce the difference in tread rubber thickness among the pitch segment for effectively off-setting RFV produced due to the difference in rigidity between pitch segments.

And also, when the distance from the tire center to the land surface is made long as the pitch length in the pitch segment becomes short, RRO is caused, which can properly be combined with the rigidity between the pitch segments to produce the difference in tread rubber thickness for effectively off-setting RFV produced due to the difference in rigidity between pitch segments to sufficiently uniformize RFV waveform over the full circumference of the tire.

Moreover, when the sum of transversely sectional areas of vent-spews is made large as the pitch length in the pitch segment becomes long, RFV can sufficiently be uniformized over the full circumference of the tire likewise the above cases.

**Claims**

1. A pneumatic tire having a tread pattern formed by arranging lateral grooves (13a, 13b, 13c) having a widthwise extending component in a ground contact portion of a tread and combining at least two kinds of pitch segments having different pitch lengths ($P_1$, $P_2$, $P_3$) in the circumferential direction of the tread, in which a negative ratio in each pitch segment is 25-55%, characterized in that the depth of the lateral groove included in each pitch segment and the angle of the groove wall with respect to the land surface are constant, and in that the pitch length ($P_1$, $P_2$, $P_3$) of each pitch segment and the opening width ($a_1$, $a_2$, $a_3$) of the lateral groove (13a, 13b, 13c) included in each pitch segment satisfy the following relationships:

$$P_1 < P_2 < P_3$$

$$a_1 < a_2 < a_3$$

$$a_1/P_1 > a_2/P_2 > a_3/P_3.$$

# FIG_ la

# FIG_ lb

## FIG. 2a

$P_1$  $P_2$  $P_3$  $P_1$

$a_1$  $a_2$  $a_3$

4a  13a  0.5ld~1.50d  13b  4b  4c  13c  0.5ld~1.50d

## FIG. 2b

0.5ld~1.50d  $\alpha$

0.5ld~1.50d  $\alpha$

$\alpha$

$C_2$  $C_1$

$d$

EP 0 691 219 A2

## FIG_3

### PRIOR ART

————Waveform due to vulcanization factor

— · ——Waveform of sixth-order component

FIG. 4a

First invention tire

FIG. 4b

First comparative tire

11

# FIG_5a

# FIG_5b

# FIG_5c

## FIG_6a

## FIG_6b

# FIG_7

——— Waveform due to vulcanization factor
—·——— Waveform of sixth-order component

**FIG.8a**

Third invention tire | Third comparative tire

0.40kg

1.70kg

**FIG.8b**

Fourth comparative tire

1.60kg

FIG_9a

FIG_9b

FIG_9c

FIG_10a

FIG_10b

FIG_11